# EUROPÄISCHE PATENTSCHRIFT

(11) **EP 4 005 677 B1**
(45) Veröffentlichungstag und Bekanntmachung des Hinweises auf die Patenterteilung: **02.08.2023**
(21) Anmeldenummer: 20209673.1
(22) Anmeldetag: 25.11.2020
(51) Int. Cl.: B02C 18/00, B02C 18/16

(54) **ZERKLEINERUNGSVORRICHTUNG MIT BELÜFTUNGSEINRICHTUNG**
CRUSHING DEVICE WITH VENTILATION DEVICE
DISPOSITIF DE CONCASSAGE POURVU D'UN SYSTÈME DE VENTILATION

(43) Veröffentlichungstag der Anmeldung: 01.06.2022
(73) Patentinhaber: Lindner, Manuel, 9800 Spittal/Drau (AT)
(72) Erfinder: LINDNER, Manuel, 9800 Spittal/Drau (AT); SCHIFFER, Peter, 9800 Spittal/Drau (AT); THURNER, Richard, 9500 Villach (AT)
(74) Vertreter: Grünecker Patent- und Rechtsanwälte PartG mbB

(56) Entgegenhaltungen:
- CN-U- 206 008 902
- CN-U- 210 935 184
- CN-U- 211 887 160

## Beschreibung

### Gebiet der Erfindung

Die vorliegende Erfindung betrifft eine Zerkleinerungsvorrichtung zur Zerkleinerung von Material insbesondere in Form von Abfallprodukten.

### Stand der Technik

Gewerbeabfall, Industrieabfall, Hausabfall etc., beispielsweise (Hart-)Kunststoff, Textilien, Verbundstoffe, Gummi oder Althölzer (wie Paletten und Spanplatten), bedürfen vor ihrer endgültigen Entsorgung oder insbesondere vor der Rückführung in den Wertstoffkreislauf der Zerkleinerung. Zur Zerkleinerung sind im Stand der Technik Ein- oder Mehrwellen- Zerkleinerer bekannt, welche beispielsweise durch Radlader, Gabelstapler oder Förderbänder über einen Trichter zur Materialaufgabe beschickt werden. Nach der Zerkleinerung wird das Material ausgetragen und mithilfe eines Transportbandes, einer Transportschnecke, eines Kettenförderers oder einer Absauganlage usw. weiterbefördert.

Maschinengehäuse herkömmlicher Zerkleinerer dienen der Aufnahme der An-und Einbauteile wie beispielsweise des Messerrotors und der Antriebskomponenten. Eine oder mehrere Rotorwellen werden von einem Materialaufnahmeraum/Prallraum umschlossen, in welchem der Zerkleinerungsvorgang stattfindet. Die eine oder die mehreren Rotorwellen gehören zum Schnittsystem und werden über eine Antriebseinrichtung mit beispielsweise einem Elektromotor, einem Getriebe und Riemen angetrieben.

Beim Zerkleinerungsvorgang kann es, je nach zu zerkleinerndem Material, zu einer starken Staubbelastung in der Umgebung der Zerkleinerungsvorrichtung kommen. Durch die Luftumwälzung in der Antriebseinrichtung stellt die Staubbelastung für die Antriebskomponenten, die aufgrund ihrer drehenden Teile aus Sicherheitsgründen zumindest zum Teil mit eingehaust werden, ein Problem dar. Da durch die Einhausung die Kühlung der Antriebskomponenten eingeschränkt wird (Hitzestau), sind typischerweise relativ große Lüftungsschlitze im Antriebsraum vorgesehen, um die zur Kühlung notwendige Luftzufuhr und -abfuhr zu gewährleisten. Hierdurch kann jedoch zwangsläufig staubbelastete Luft in den Antriebsraum eindringen und zur Verschmutzung führen. Auch kann gegebenenfalls Staub durch Gehäusedurchbrüche aus dem Materialaufnahmeraum in den Antriebsraum gelangen. Die Verschmutzung mit Staub kann zur Überhitzung, im Extremfall zum Ausfall einzelner Komponenten der Antriebseinrichtung führen. Im Stand der Technik ist daher eine regelmäßige aufwändige Reinigungswartung erforderlich.

Es ist somit angesichts der genannten Probleme eine Aufgabe der vorliegenden Erfindung, eine verbesserte Zerkleinerungsvorrichtung bereitzustellen, in der die Antriebseinrichtung hinreichend gekühlt wird, ohne dass sie derart verschmutzt wird, dass eine häufige Reinigungswartung des Antriebsraums erforderlich ist. Eine Zerkleinerungsvorrichtung gemäß dem Oberbegriff des unabhängigen Anspruchs 1 ist in dem Dokument CN 211 887 160 U offenbart.

### Beschreibung

Die obige Aufgabe wird durch eine Zerkleinerungsvorrichtung gemäß Anspruch 1 gelöst. Diese Zerkleinerungsvorrichtung (beispielsweise ein Ein- oder Mehrwellen-Zerkleinerer) umfasst ein Maschinengehäuse, in dem ein Antriebsraum und ein Materialaufnahmeraum ausgebildet sind. Die Zerkleinerungsvorrichtung kann ein Gewicht von mehreren Tonnen, beispielsweise mehr als 1 Tonne, insbesondere mehr als 3 Tonnen, und Abmessungen von mehr als einem Meter oder mehreren Metern in Länge, Breite und Höhe aufweisen. Die Vorrichtung kann kontinuierlich oder im Chargenbetrieb (Batchbetrieb) betrieben werden.

Der Materialaufnahmeraum dient der Aufnahme von zu zerkleinerndem Material. Bei dem zu zerkleinernden Material kann es sich beispielsweise um Gewerbeabfall, Industrieabfall, Hausabfall etc., beispielsweise (Hart-)Kunststoff, Textilien, Verbundstoffe, Gummi oder Althölzer (wie Paletten und Spanplatten) oder organischer Abfall handeln. Die Zerkleinerung erfolgt in dem Materialaufnahmeraum.

Weiterhin umfasst die Zerkleinerungsvorrichtung eine bewegliche Einrichtung zum Zerkleinern von Material, die zumindest teilweise in dem Materialaufnahmeraum des Maschinengehäuses angeordnet ist. Diese bewegliche Einrichtung zum Zerkleinern von Material kann einen oder mehrere Rotorwellen umfassen. An der Rotorwelle kann ein Träger mit Zerkleinerungswerkzeugen, insbesondere Messern oder Prallplatten und gegebenenfalls oberhalb davon Schlegelwerkezeugen zur groben Vorzerkleinerung, angebracht sein. Weiterhin kann die bewegliche Einrichtung zum Zerkleinern von Material einen Nachdrücker umfassen, mithilfe dessen das zu zerkleinernde Material zu der einen oder den mehreren Rotorwellen hin gedrückt werden kann.

Weiterhin umfasst die Zerkleinerungsvorrichtung eine Antriebseinrichtung, die zum Antreiben der beweglichen Einrichtung zum Zerkleinern von Material ausgebildet ist und zumindest teilweise in dem Antriebsraum des Maschinengehäuses angeordnet ist. Diese Antriebseinrichtung kann einen Motor, insbesondere einen Elektromotor, einen Riemenantrieb, ein Getriebe und einen Riemen umfassen.

Weiterhin umfasst die Zerkleinerungsvorrichtung eine motorbetriebene Belüftungseinrichtung (beispielsweise eine selbstreinigende motorbetriebene Belüftungseinrichtung), die zum Belüften des Antriebsraums ausgebildet ist und eine Reinigungseinrichtung zum Reinigen von zum Belüften des Antriebsraums bereitgestellter Luft umfasst. Die motorbetriebene Belüftungseinrichtung liefert gereinigte Luft aus der Umgebung des Maschinengehäuses in den Antriebsraum, in dem sich zumindest Teile der Antriebseinrichtung befinden. Somit lässt sich verhindern, dass ein signifikanter Staubeintrag aus der Umgebung in den Antriebsraum erfolgt. Insbesondere dient die von der motorbetriebenen Belüftungseinrichtung in den Antriebsraum gelieferte Frischluft auch der Kühlung der Komponenten der Antriebseinrichtung. Es kann somit vorgesehen sein, dass auf absichtlich in die Außenwände des Antriebsraums eingefügte Lüftungsschlitze, die im Stand der Technik den Antriebsraum mit der Umgebung des Maschinengehäuses zum Einlassen von Umgebungsluft in den Antriebsraum verbinden, verzichtet wird. Die motorbetriebene Belüftungseinrichtung ist wünschenswerter Weise möglichst luftdicht (etwa über entsprechende Zuführungen und Dichtungen) mit dem Antriebsraum verbunden.

Da erfindungsgemäß im Wesentlichen staubfreie Luft in den Antriebsraum und somit zu den dort befindlichen Komponenten der Antriebseinrichtung geliefert wird, sind die regelmäßigen Reinigungswartungen des Antriebsraums nicht länger erforderlich oder können entsprechende Wartungsintervalle zumindest deutlich vergrößert werden. Stillstandzeiten der Zerkleinerungsvorrichtung können somit gegenüber dem Stand der Technik mit dem entsprechenden ökonomischen Nutzen deutlich verringert werden.

Es ist außerdem anzumerken, dass aus dem Betriebsraum zuvor von der Belüftungseinrichtung in den Betriebsraum gelieferte und wieder ausweichende Luft im Betriebsraum durch den Betrieb der Antriebseinrichtung erzeugte Wärme ableiten kann. Die Luft kann hierbei beispielsweise durch baulich bedingte, unvermeidbare Öffnungen des Maschinengehäuses, bzw. der Antriebseinhausung, entweichen. Somit dient die Belüftungseinrichtung nicht nur dem Reinhalten des Betriebsraums, sondern zusätzlich der Ableitung von Betriebswärme an die Umgebung. Für eine kontrollierte Ausleitung der in dem Betriebsraum erwärmten Luft kann ein entsprechender (gegebenenfalls gesteuerter oder geregelter) Auslass im Betriebsraum vorgesehen sein. Mithilfe eines solchen Auslasses kann ein wohldefinierter Lüftungsstrom durch den Antriebsraum hindurch zum effizienten Belüften desselben ausgebildet werden.

Die motorbetriebene Belüftungseinrichtung kann einen (Radial-)Ventilator umfassen. Mithilfe eines solchen Ventilators lässt sich effizient und relativ wenig störanfällig Luft von dem Außenraum des Maschinengehäuses in den Antriebsraum befördern.

Gemäß einer Weiterbildung umfasst die Reinigungseinrichtung der motorbetriebenen Belüftungseinrichtung einen Luftvorabscheider, mithilfe dessen Staub aus der Umgebungsluft des Maschinengehäuses vor der Belüftung des Antriebsraums effizient abgeschieden werden kann. Weiterhin kann die Reinigungseinrichtung der motorbetriebenen Belüftungseinrichtung ein (insbesondere dem Luftvorabscheider vorgeordnetes) Lochblech zur Grobabscheidung von Störstoffen vor der Belüftung des Antriebsraums umfassen, mithilfe dessen der Betrieb der Belüftungseinrichtung gegen Störungen durch größere Kontaminationspartikel (etwa Kunststoffpartikel) geschützt werden kann. Auch kann die Reinigungseinrichtung einen wechselbaren Feinfilter (beispielsweise in Form eines Mattenfilters) aufweisen.

Gemäß einer weiteren Weiterbildung ist die motorbetriebene Belüftungseinrichtung der erfindungsgemäßen Zerkleinerungsvorrichtung dazu ausgebildet, in dem Antriebsraum einen Überdruck gegenüber der Umgebung des Maschinengehäuses und/oder dem Materialaufnahmeraum des Maschinengehäuses zu erzeugen. Die Leistungsfähigkeit der Belüftungseinrichtung (und etwa des oben genannten Ventilators) muss entsprechend ausgelegt sein. Beispielsweise kann ein Überdruck (über dem Atmosphärendruck von 1 bar) von mehr als 0,1 bar oder mehr als 0,5 bar oder mehr als 1,5 bar vorgesehen sein. Wenn durch die gereinigte Luft ein Überdruck in dem Antriebsraum ausgebildet wird, kann zuverlässig verhindert werden, dass ein signifikanter Staubanteil in den Antriebsraum eindringt.

Weiterhin kann die Zerkleinerungsvorrichtung eine Kühleinrichtung zum Kühlen von von der motorbetriebenen Belüftungseinrichtung in den Antriebsraum gelieferter Luft umfassen. Das Zuführen gekühlter Luft in den Antriebsraum führt zu einer verbesserten Wärmeabfuhr (s. oben) aus dem Antriebsraum heraus.

Die oben genannte Aufgabe wird auch durch Bereitstellen eines Verfahrens zum Belüften eines in einem Maschinengehäuse einer Zerkleinerungsvorrichtung ausgebildeten Antriebsraums, in dem zumindest teilweise eine Antriebseinrichtung für eine bewegliche Einrichtung zum Zerkleinern von Material angeordnet ist, gelöst. Dieses Verfahren umfasst die Schritte des Reinigens und Zuführens von Luft von außerhalb des Maschinengehäuses in den Antriebsraum der Zerkleinerungsvorrichtung mithilfe einer motorbetriebenen Belüftungseinrichtung.

Das Verfahren kann weiterhin den Schritt des Aufbauens eines Überdrucks in dem Antriebsraum der Zerkleinerungsvorrichtung gegenüber der Umgebung des Maschinengehäuses der Zerkleinerungsvorrichtung und/oder gegenüber einem in dem Maschinengehäuse ausgebildeten Materialaufnahmeraum umfassen.

Das Verfahren kann weiterhin den Schritt des Ableitens von von der Antriebseinrichtung erzeugter Wärme durch Herausdrücken von in dem Antriebsraum erwärmter Luft aus dem Antriebsraum heraus mithilfe der motorbetriebenen Belüftungseinrichtung umfassen.

Weitere Merkmale und beispielhafte Ausführungsformen der vorliegenden Erfindung werden nachfolgend anhand der Zeichnungen näher erläutert. Es versteht sich, dass die Ausführungsformen nicht den Bereich der vorliegenden Erfindung erschöpfen. Es versteht sich weiterhin, dass einige oder sämtliche der im weiteren beschriebenen Merkmale auch auf andere Weise miteinander kombiniert werden können.
Figur 1 zeigt eine Zerkleinerungsvorrichtung gemäß einer Ausführungsform der vorliegenden Erfindung.
Figur 2 zeigt eine motorbetriebene Belüftungseinrichtung für eine Zerkleinerungsvorrichtung gemäß einer Ausführungsform der vorliegenden Erfindung.

Die vorliegende Erfindung stellt eine Zerkleinerungsvorrichtung bereit, die eine motorbetriebene Belüftungseinrichtung umfasst, die dazu dient, einen Antriebsraum, der in einem Maschinengehäuse der Zerkleinerungsvorrichtung ausgebildet ist, mit Frischluft zu versorgen, um Staub aus dem Antriebsraum rauszuhalten und eine zumindest teilweise in dem Antriebsraum angeordnete Antriebseinrichtung zu kühlen.

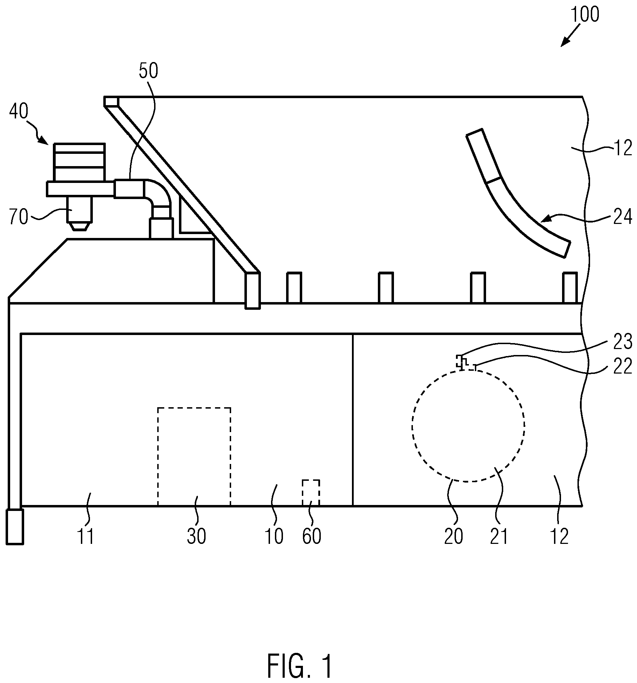

Eine beispielhafte Ausführungsform einer solchen Zerkleinerungsvorrichtung 100 ist in der Figur 1 gezeigt. Die in Figur 1 gezeigte Zerkleinerungsvorrichtung 100 umfasst ein Maschinengehäuse 10 mit einem Antriebsraum 11 und einem Materialaufnahmeraum 12, die einen zumindest teilweise durch Wände definierten Innenraum der Zerkleinerungsvorrichtung 100 bilden. Der Antriebsraum 11 ist von dem Materialaufnahmeraum 12 im Wesentlichen durch eine (Stahl)Wand abgetrennt. Der Innenraum kann ein solcher Raum sein, der durch Aufbauten jeglicher Art, beispielsweise trichterförmiger Aufbauten 12 zur Materialaufgabe, vergrößerbar oder vergrößert ist. In den Materialaufnahmeraum 12 wird das zu zerkleinernde Material eingeführt, und innerhalb dieses Materialaufnahmeraums 12 befindet sich eine bewegliche Einrichtung 20 zum Zerkleinern von Material, die einen Rotor 21 umfasst, an dem in Messerhalterungen 22 Messer 23 befestigt sind.

Weiterhin kann die bewegliche Einrichtung 20 zum Zerkleinern von Material einen Nachdrücker 24 zum Drücken des zu zerkleinernden Materials gegen den Rotor 21 umfassen. Die bewegliche Einrichtung 20 zum Zerkleinern von Material wird durch eine zumindest teilweise in dem Antriebsraum 11 angeordnete Antriebseinrichtung 30, beispielsweise über entsprechende Antriebsriemen, angetrieben.

Erfindungsgemäß umfasst die Zerkleinerungsvorrichtung 100 eine motorbetriebene Belüftungseinrichtung 40, die über eine Verbindung 50 luftdicht mit dem Antriebsraum 11 verbunden ist. Mithilfe der motorbetriebenen Belüftungseinrichtung 40 wird aus der Umgebung des Maschinengehäuses 10 bereitgestellt und gereinigte Luft in den Antriebsraum 11 geliefert.

Insbesondere kann der Antriebsraum 11 mithilfe der motorbetriebenen Belüftungseinrichtung 40 unter Überdruck gesetzt werden. Eine unter Überdruck stehende gereinigte Luft in dem Antriebsraum 11 verhindert das Eindringen von mit Staub kontaminierter Luft. Wieder aus dem Antriebsraum ausweichende Luft kann Wärme aus dem Antriebsraum 11 abtransportieren, die von der Antriebseinrichtung 30 beim Betrieb der Zerkleinerungsvorrichtung 100 erzeugt wird. Der Auslass der Luft aus dem Antriebsraum 11 kann beispielsweise über einen in einer Wand des Antriebsraums 11 vorgesehenen, etwa regel- oder steuerbare, Auslass 60 erfolgen. In oder an der motorbetriebenen Belüftungseinrichtung 40 kann eine Kühleinrichtung 70 vorgesehen sein, die der Kühlung der dem Antriebsraum 11 zuzuliefernden Luft dienen kann.

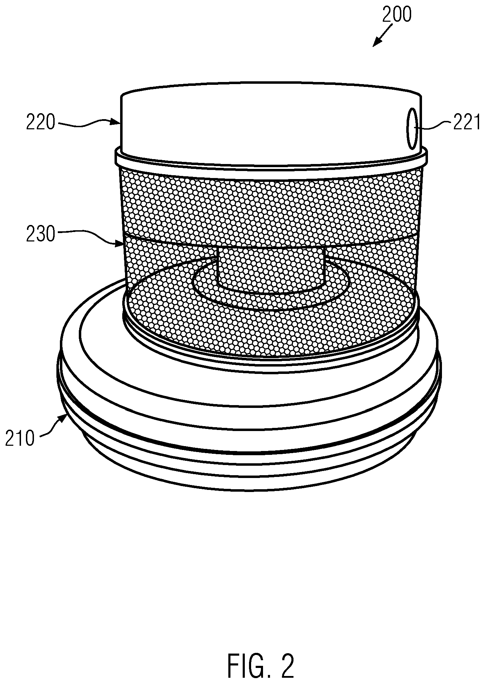

Ein Beispiel für eine motorbetriebene Belüftungseinrichtung für eine Zerkleinerungsvorrichtung, beispielsweise die motorbetriebene Belüftungseinrichtung 40 der in Figur 1 gezeigten Zerkleinerungsvorrichtung 100, ist in Figur 2 veranschaulicht. Die in Figur 2 gezeigte motorbetriebene Belüftungseinrichtung 200 weist einen Ventilator 210 zum Ansaugen von Luft, etwa aus der Umgebung des in Figur 1 gezeigten Maschinengehäuses 10, auf. Der Ventilator 210 kann als Radialventilator ausgebildet sein. Weiterhin umfasst die motorbetriebene Belüftungseinrichtung 200 einen Luftvorabscheider 220, der der Abscheidung von Staub aus Luft vor der Belüftung des Antriebsraums 11 mit der Luft dient. Der Staub verlässt den Luftvorabscheider 220 über einen entsprechenden Staubauslass 221. Weiterhin ist am Lufteintritt der motorbetriebenen Belüftungseinrichtung 200 ein Lochblech 230 (etwa aus einem Metall- oder Kunststoffmaterial) vorgesehen. An diesem Lochblech 230 können größere Partikel (insbesondere größer als Staub der Umgebungsluft) angefangen werden. Das Lochblech 230 kann an dem Körper der motorbetriebenen Belüftungseinrichtung 200 beispielsweise mit Kantendichtprofilen befestigt sein.

Erfindungsgemäß kann somit eine gegenüber dem Stand der Technik verbesserte Zerkleinerungsvorrichtung bereitgestellt werden, in der eine motorbetriebene Belüftungseinrichtung zur Belüftung eines Antriebsraums beziehungsweise zum Aufbau eines Überdrucks in dem Antriebsraum Verwendung findet, um eine Kontamination des Antriebsraums zu verhindern und eine Kühlung von in dem Antriebsraum befindlichen Komponenten einer Antriebsreinrichtung zu bewirken.

## Patentansprüche

1. Eine Zerkleinerungsvorrichtung (100), die umfasst:
ein Maschinengehäuse (10), in dem ein Antriebsraum (11) und ein Materialaufnahmeraum (12) ausgebildet sind;
eine bewegliche Einrichtung (20) zum Zerkleinern von Material, die zumindest teilweise in dem Materialaufnahmeraum (12) des Maschinengehäuses (10) angeordnet ist;
eine Antriebseinrichtung (30), die zum Antreiben der beweglichen Einrichtung (20) zum Zerkleinern von Material ausgebildet ist und zumindest teilweise in dem Antriebsraum (11) des Maschinengehäuses (10) angeordnet ist; und
eine motorbetriebene Belüftungseinrichtung (40, 200), die zum Belüften des Antriebsraums (11) ausgebildet ist **gekennzeichnet dadurch, dass** die Belüftungseinrichtung eine Reinigungseinrichtung zum Reinigen von zum Belüften des Antriebsraums (11) bereitgestellter Luft umfasst.

2. Die Zerkleinerungsvorrichtung (100) gemäß Anspruch 1, in der die motorbetriebene Belüftungseinrichtung (40, 200) einen Ventilator (210) umfasst.

3. Die Zerkleinerungsvorrichtung (100) gemäß Anspruch 1 oder 2, in der die Reinigungseinrichtung der motorbetriebenen Belüftungseinrichtung (40, 200) einen Luftvorabscheider (220) zur Abscheidung von Staub aus Luft vor der Belüftung des Antriebsraums (11) mit der Luft umfasst.

4. Die Zerkleinerungsvorrichtung (100) gemäß einem der vorhergehenden Ansprüche, in der die Reinigungseinrichtung der motorbetriebenen Belüftungseinrichtung (40, 200) ein Lochblech (230) zur Grobabscheidung von Störstoffen aus Luft vor der Belüftung des Antriebsraums (11) mit der Luft umfasst.

5. Die Zerkleinerungsvorrichtung (100) gemäß einem der vorhergehenden Ansprüche, in der die motorbetriebene Belüftungseinrichtung (40) dazu ausgebildet ist, in dem Antriebsraum (11) einen Überdruck gegenüber der Umgebung des Maschinengehäuses (10) und/oder dem Materialaufnahmeraum (12) des Maschinengehäuses (10) zu erzeugen.

6. Die Zerkleinerungsvorrichtung (100) gemäß einem der vorhergehenden Ansprüche, in der die bewegliche Einrichtung (20) zum Zerkleinern von Material einen oder mehrere Rotorwellen (21) umfasst.

7. Die Zerkleinerungsvorrichtung (100) gemäß einem der vorhergehenden Ansprüche, in der die bewegliche Einrichtung (20) zum Zerkleinern von Material einen Nachdrücker (24) umfasst.

8. Die Zerkleinerungsvorrichtung (100) gemäß einem der vorhergehenden Ansprüche, die weiterhin eine Kühleinrichtung zum Kühlen von von der motorbetriebenen Belüftungseinrichtung (40, 200) in den Antriebsraum (11) gelieferter Luft umfasst.

9. Die Zerkleinerungsvorrichtung (100) gemäß einem der vorhergehenden Ansprüche, wobei der Antriebsraum (11) nicht über Lüftungsschlitze, die zum Einlassen von Umgebungsluft in den Antriebsraum (11) ausgebildet sind, mit der Umgebung des Maschinengehäuses verbunden ist.

10. Die Zerkleinerungsvorrichtung (100) gemäß einem der vorhergehenden Ansprüche, wobei der Antriebsraum (11) eine, insbesondere gesteuerten oder geregelten, Auslass zum Auslassen von von der Belüftungseinrichtung (40) gelieferter Luft umfasst.

11. Die Zerkleinerungsvorrichtung (100) gemäß einem der vorhergehenden Ansprüche, wobei die Zerkleinerungsvorrichtung (100) ein Ein- oder Mehrwellen-Zerkleinerer ist.

12. Verfahren zum Belüften eines in einem Maschinengehäuse (10) einer Zerkleinerungsvorrichtung (100) ausgebildeten Antriebsraums (11), in dem zumindest teilweise eine Antriebseinrichtung (30) für eine bewegliche Einrichtung (20) zum Zerkleinern von Material angeordnet ist, mit Reinigen und Zuführen von Luft von außerhalb des Maschinengehäuses (10) in den Antriebsraum (11) der Zerkleinerungsvorrichtung (100) mithilfe einer motorbetriebenen Belüftungseinrichtung (40, 200).

13. Das Verfahren gemäß Anspruch 12, weiterhin mit Aufbauen eines Überdrucks in dem Antriebsraum (11) der Zerkleinerungsvorrichtung (100) gegenüber der Umgebung des Maschinengehäuses (10) der Zerkleinerungsvorrichtung (100) und/oder gegenüber einem in dem Maschinengehäuse (10) ausgebildeten Materialaufnahmeraum (12).

14. Das Verfahren gemäß Anspruch 12 oder 13, weiterhin mit Ableiten von von der Antriebseinrichtung (30) erzeugter Wärme durch Herausdrücken von in dem Antriebsraum (11) erwärmter Luft aus dem Antriebsraum (11) heraus mithilfe der motorbetriebenen Belüftungseinrichtung (40, 200).

## Claims

1. A shredding apparatus (100) comprising:
a machine housing (10) in which a drive compartment (11) and a material receiving compartment (12) are formed;
a movable device (20) for shredding material at least partially arranged in the material receiving compartment (12) of the machine housing (10);
a drive device (30) configured to drive the movable device (20) for crushing material and being arranged at least partially in the drive compartment (11) of the machine housing (10); and
a motor-driven ventilation device (40, 200) configured to ventilate the drive compartment (11), **characterized in that** the ventilation device comprises a cleaning device for cleaning air provided for ventilating the drive compartment (11).

2. The shredding apparatus (100) according to claim 1, wherein the motor-driven ventilation device (40, 200) comprises a fan (210).

3. The shredding apparatus (100) according to claim 1 or 2, wherein the cleaning device of the motor-driven ventilation device (40, 200) comprises an air preseparator (220) for separating dust from air prior to ventilation of the drive chamber (11) with the air.

4. The shredding apparatus (100) according to any one of the preceding claims, wherein the cleaning device of the motor-driven ventilation device (40, 200) comprises a perforated sheet (230) for coarse separation of foreign materials from air prior to ventilation of the drive compartment (11) with the air.

5. The shredding apparatus (100) according to any one of the preceding claims, wherein the motor-driven ventilation device (40) is configured to produce an overpressure in the drive compartment (11) relative to the environment of the machine, the machine housing (10) and/or the material receiving compartment (12) of the machine housing (10).

6. The shredding apparatus (100) according to any one of the preceding claims, wherein the movable device (20) for shredding material comprises one or more rotor shafts (21).

7. The shredding apparatus (100) according to any one of the preceding claims, wherein the movable device (20) for shredding material comprises a pusher (24).

8. The shredding apparatus (100) according to any one of the preceding claims, further comprising a cooling device for cooling air supplied from the motor-driven ventilation device (40, 200) to the drive compartment (11).

9. The shredding apparatus (100) according to any one of the preceding claims, wherein the drive compartment (11) is not connected to the environment of the machine housing via ventilation slots configured to admit ambient air into the drive chamber (11).

10. The shredding apparatus (100) according to any one of the preceding claims, wherein the drive compartment (11) comprises an outlet, in particular a controlled or regulated outlet, for discharging air supplied by the ventilation device (40).

11. The shredding apparatus (100) according to any one of the preceding claims, wherein the shredding apparatus (100) is a single or multi-shaft shredder.

12. Method for ventilating a drive compartment (11) formed in a machine housing (10) of a shredding apparatus (100), in which a drive device (30) for a movable device (20) for shredding material is at least partially arranged comprising:
cleaning and supplying air from outside the machine housing (10) to the drive chamber (11) of the shredding apparatus (100) by means of a motor-driven ventilation device (40, 200).

13. The method according to claim 12, further comprising building up an overpressure in the drive chamber (11) of the shredding apparatus (100) relative to the environment of the machine housing (10) of the shredding apparatus (100) and/or relative to a material receiving compartment (12) formed in the machine housing (10).

14. The method according to claim 12 or 13, further comprising dissipating heat generated by the drive device (30) by pushing air heated in the drive compartment (11) out of the drive compartment (11) by means of the motor-driven ventilation device (40, 200).

## Revendications

1. Dispositif de broyage (100) comprenant :
un boîtier de machine (10) au sein duquel sont agencées une chambre d'entraînement (11) et une chambre de réception de matériau (12) ;
un dispositif mobile (20) permettant de broyer un matériau et agencé au moins partiellement dans la chambre de réception de matériau (12) du boîtier de machine (10) ;
un dispositif d'entraînement (30) qui est conçu pour entraîner le dispositif mobile (20) permettant de broyer un matériau et est agencé au moins partiellement dans la chambre d'entraînement (11) du boîtier de machine (10) ; et
un dispositif de ventilation (40, 200) actionné par moteur et conçu pour ventiler la chambre d'entraînement (11), **caractérisé en ce que** le dispositif de ventilation comprend un dispositif de purification permettant de purifier l'air fourni pour ventiler la chambre d'entraînement (11).

2. Dispositif de broyage (100) selon la revendication 1, dans lequel le dispositif de ventilation (40, 200) actionné par moteur comprend un ventilateur (210).

3. Dispositif de broyage (100) selon la revendication 1 ou 2, dans lequel le dispositif de purification du dispositif de ventilation (40, 200) actionné par moteur comprend un pré-séparateur d'air (220) permettant de séparer la poussière d'avec l'air avant la ventilation de la chambre d'entraînement (11) avec l'air.

4. Dispositif de broyage (100) selon l'une quelconque des revendications précédentes, dans lequel le dispositif de purification du dispositif de ventilation (40, 200) actionné par moteur comprend une tôle perforée (230) permettant de séparer grossièrement les impuretés d'avec l'air avant la ventilation de la chambre d'entraînement (11) avec l'air.

5. Dispositif de broyage (100) selon l'une quelconque des revendications précédentes, dans lequel le dispositif de ventilation (40) actionné par moteur est conçu pour créer une surpression dans la chambre d'entraînement (11) par rapport à l'environnement du boîtier de machine (10) et/ou par rapport à la chambre de réception de matériau (12) du boîtier de machine (10).

6. Dispositif de broyage (100) selon l'une quelconque des revendications précédentes, dans lequel le dispositif mobile (20) permettant de broyer un matériau comprend un ou plusieurs arbre(s) de rotor (21).

7. Dispositif de broyage (100) selon l'une quelconque des revendications précédentes, dans lequel le dispositif mobile (20) permettant de broyer un matériau comprend un poussoir (24).

8. Dispositif de broyage (100) selon l'une quelconque des revendications précédentes, comprenant en outre un dispositif de refroidissement permettant de refroidir l'air fourni dans la chambre d'entraînement (11) par le dispositif de ventilation (40, 200) actionné par moteur.

9. Dispositif de broyage (100) selon l'une quelconque des revendications précédentes, dans lequel la chambre d'entraînement (11) n'est pas reliée à l'environnement du boîtier de machine par des fentes de ventilation conçues pour admettre de l'air ambiant dans la chambre d'entraînement (11).

10. Dispositif de broyage (100) selon l'une quelconque des revendications précédentes, dans lequel la chambre d'entraînement (11) comprend une sortie, en particulier commandée ou régulée, permettant de faire sortir l'air fourni par le dispositif de ventilation (40).

11. Dispositif de broyage (100) selon l'une quelconque des revendications précédentes, dans lequel le dispositif de broyage (100) est un broyeur à un ou plusieurs arbre(s).

12. Procédé de ventilation d'une chambre d'entraînement (11) réalisée dans un boîtier de machine (10) d'un dispositif de broyage (100) et au sein de laquelle est agencé au moins partiellement un dispositif d'entraînement (30) destiné à un dispositif mobile (20) permettant de broyer un matériau, avec purification et acheminement d'air depuis l'extérieur du boîtier de machine (10) jusque dans la chambre d'entraînement (11) du dispositif de broyage (100) à l'aide d'un dispositif de ventilation (40, 200) actionné par moteur.

13. Procédé selon la revendication 12, comprenant en outre une étape consistant à établir une surpression dans la chambre d'entraînement (11) du dispositif de broyage (100) par rapport à l'environnement du boîtier de machine (10) du dispositif de broyage (100) et/ou par rapport à une chambre de réception de matériau (12) réalisée dans le boîtier de machine (10).

14. Procédé selon la revendication 12 ou 13, comprenant en outre une étape consistant à évacuer la chaleur générée par le dispositif d'entraînement (30) grâce à une étape consistant à pousser l'air échauffé dans la chambre d'entraînement (11) hors de la chambre d'entraînement (11) à l'aide du dispositif de ventilation (40, 200) actionné par moteur.
